# FASCICULE DE BREVET EUROPEEN

(11) **EP 1 694 492 B1**
(45) Date de publication et mention de la délivrance du brevet: **27.06.2007**
(21) Numéro de dépôt: 04821080.1
(22) Date de dépôt: 19.11.2004
(51) Int. Cl.: B29C 49/12

(54) **AGENCEMENT POUR LA FIXATION AMOVIBLE D UNE TIGE D ETIRA GE SUR UN COULISSEAU**
ANORDNUNG ZUM LÖSBAREN BEFESTIGEN EINER RECKSTANGE AN EINEM SCHIEBER
ARRANGEMENT FOR REMOVEABLY FIXING A STRETCHING ROD ON A SLIDE

(30) Priorité: 19.12.2003 FR 0351122
(43) Date de publication de la demande: 30.08.2006
(73) Titulaire: SIDEL PARTICIPATIONS, 76930 Octeville-sur-Mer (FR)
(72) Inventeur: DUPUIS, Pascal, F-76930 OCTEVILLE SUR MER (FR); MIE, Patrick, F-76930 OCTEVILLE SUR MER (FR)
(74) Mandataire: Kohn, Philippe
(86) Numéro de dépôt international: PCT/EP2004/053018
(87) Numéro de publication internationale: WO 2005/068159

(56) Documents cités:
- WO-A-98/01284
- FR-A- 2 720 678

## Description

L'invention concerne un agencement pour la fixation amovible d'une tige d'étirage dans une machine de soufflage et d'étirage.

Ce type de machine est utilisé pour la fabrication de récipients, et notamment de bouteilles, en plastique, par exemple en polyéthylène téréphtalate (PET), à partir de préformes qui sont conformées en bouteille par une opération de soufflage et d'étirage Voir document FR2720678.

L'invention concerne plus particulièrement un agencement pour la fixation amovible d'une tige d'étirage sur un coulisseau mobile appartenant à une machine de soufflage et d'étirage d'une préforme pour la fabrication de récipients, du type dans lequel le coulisseau est monté coulissant par rapport à un support suivant un axe sensiblement vertical au-dessus de l'ouverture de la préforme, du type dans lequel la tige d'étirage est fixée sur le coulisseau par l'intermédiaire d'un dispositif de fixation comportant :
- un boîtier qui est fixé sur le coulisseau, qui est muni d'une cloison transversale supérieure et d'une cloison transversale inférieure délimitant axialement un logement interne, chaque cloison comportant une ouverture axiale permettant le passage d'un tronçon associé de la tige d'étirage,
- un élément d'appui qui comporte plusieurs portions circonférentielles serrées radialement sur un tronçon de la tige d'étirage, qui est prévu pour être inséré axialement à l'intérieur du logement du boîtier en passant par l'ouverture axiale supérieure du boîtier, et qui comporte une surface transversale supérieure prévue pour venir en appui axial contre une portion de la face interne inférieure de la cloison transversale supérieure du boîtier, pendant l'étape d'étirage, et une surface transversale inférieure prévue pour venir en appui axial contre une portion de la face interne supérieure de la cloison transversale inférieure du boîtier de manière à retenir la tige axialement vers le bas dans le boîtier, de manière que la tige d'étirage puisse être fixée sur le coulisseau par un montage du type à baïonnette, la tige étant insérée axialement, avec l'élément d'appui, dans le boîtier, et la tige subissant un pivotement autour de son axe, depuis une position angulaire d'insertion jusqu'à une position angulaire montée, pour placer une portion de la surface transversale supérieure de l'élément d'appui en regard de la face interne associée du boîtier.

Ce type d'agencement est particulièrement utile pour permettre le changement rapide de la tige d'élongation sur chaque poste d'étirage d'une machine de soufflage et d'étirage, en fonction du type de préforme utilisé et en fonction du type de bouteille que l'on souhaite fabriquer. En effet, grâce à cet agencement on peut disposer de tiges d'étirage de longueurs prédéterminées, comportant un dispositif de fixation préréglé en hauteur, ce qui permet de supprimer des opérations de réglage sur la machine, et donc de limiter les phases d'arrêt de la machine.

Généralement, dans ce type d'agencement, l'élément d'appui, dit clame, est réalisé en deux parties symétriques formant ensemble un parallélépipède rectangle, lorsqu'elles sont serrées sur la tige d'élongation.

L'ouverture du boîtier a une forme rectangulaire complémentaire de l'élément d'appui. L'élément d'appui peut ainsi être inséré axialement dans le boîtier, avec la tige d'élongation, puis être tourné d'un quart de tour de manière à ce que la face supérieure du parallélépipède puisse venir en appui axial, par ses deux portions d'extrémité transversale, sur la face interne du boîtier en vis-à-vis pendant la phase d'élongation.

Ce type d'agencement n'est pas complètement satisfaisant car, pendant la phase d'élongation, l'élément d'appui comporte une aire d'appui axial relativement limitée sur le boîtier, ce qui induit des sollicitations mécaniques importantes, notamment en flexion, sur l'élément d'appui.

De plus, le positionnement de l'élément d'appui dans le boîtier nécessite une rotation d'un quart de tour, ce qui peut constituer une course angulaire relativement importante, compte tenu des différentes opérations manuelles qui doivent être effectuées lors du changement de tige d'élongation sur la machine de soufflage et d'étirage. En particulier, cette course angulaire doit se répéter sur tous les postes de soufflage et d'étirage que comporte la machine.

L'invention vise à remédier à ces inconvénients en proposant une solution simple, efficace et économique.

Dans ce but, l'invention propose un agencement du type décrit précédemment, caractérisé en ce que le tronçon supérieur d'extrémité de l'élément d'appui est formé par au moins deux oreilles radiales de profil arrondi, en section transversale, la surface transversale supérieure d'appui étant formée par la face transversale supérieure des oreilles, et en ce que le profil transversal formé par le bord périphérique de l'ouverture supérieure du boîtier est sensiblement complémentaire du profil des oreilles.

Selon d'autres caractéristiques de l'invention :
- l'élément d'appui comporte un tronçon cylindrique inférieur d'extrémité dont le diamètre est inférieur à la dimension transversale maximale du tronçon supérieur et est supérieur au diamètre de l'ouverture axiale inférieure du boîtier, de manière que la face transversale inférieure du tronçon cylindrique vienne en appui axial contre la face interne de la cloison inférieure du boîtier ;
- le tronçon supérieur de l'élément d'appui comporte quatre oreilles radiales similaires ;
- l'élément d'appui est réalisé en deux portions sensiblement symétriques par rapport à un plan axial ;
- chaque portion comporte deux oreilles radiales ;
- les deux portions sont serrées radialement contre le tronçon associé de la tige d'étirage au moyen d'au moins une vis de serrage qui s'étend suivant une direction sensiblement orthogonale à un diamètre de la tige d'étirage ;
- les oreilles radiales sont réparties angulairement de manière régulière ;
- un tronçon de l'élément d'appui comporte un orifice extérieur de blocage angulaire qui est prévu pour recevoir, à travers un trou aménagé dans une paroi latérale du boîtier, un doigt de verrouillage complémentaire, en vue d'immobiliser l'élément d'appui dans sa position montée.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente schématiquement un poste de soufflage et d'étirage équipé d'un agencement pour la fixation amovible d'une tige d'élongation sur un coulisseau réalisé conformément aux enseignements de l'invention ;
- la figure 2 est une vue en perspective partiellement éclatée qui représente une tige d'élongation équipée d'un élément d'appui prévu pour être inséré dans un boîtier appartenant à l'agencement selon l'invention ;
- la figure 3 est une vue suivant le plan de coupe 3-3 qui représente la tige d'élongation et l'élément d'appui en position montée et verrouillée dans le boîtier ;
- la figure 4 est une vue de dessus qui représente la tige d'élongation et l'élément d'appui en position angulaire d'insertion dans l'ouverture supérieure du boîtier ;
- la figure 5 est une vue similaire à celle de la figure 4 qui représente la tige d'élongation et l'élément d'appui en position angulaire montée et verrouillée dans le boîtier.

Pour la description de l'invention, on adoptera à titre non limitatif les orientations verticale et transversale selon le repère V, T indiqué aux figures.

Dans la description qui va suivre, des éléments identiques, similaires ou analogues seront désignés par les mêmes chiffres de référence.

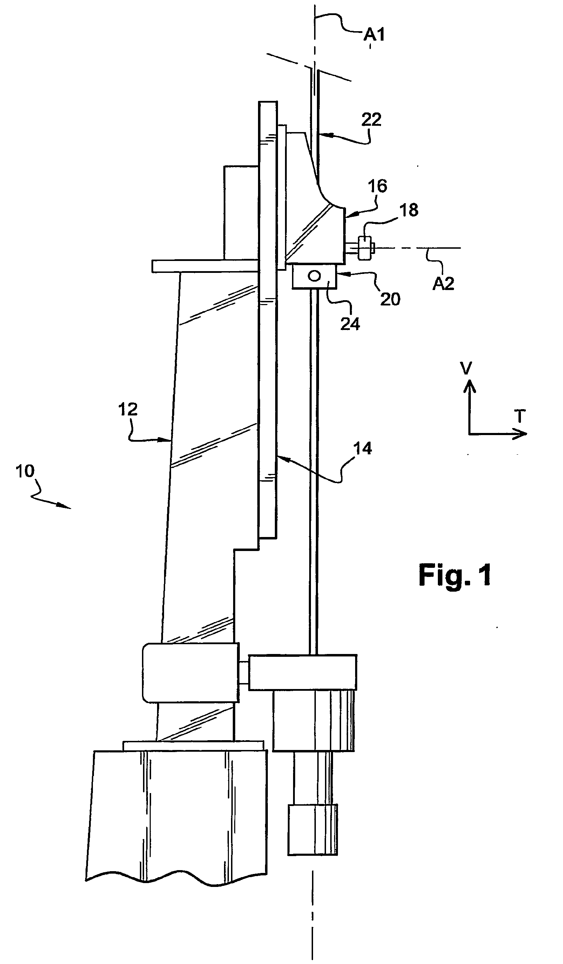

Sur la figure 1, on a représenté partiellement un poste 10 de soufflage et d'étirage d'une machine de soufflage et d'étirage pour la fabrication de récipients en matière thermoplastique par soufflage et étirage d'une préforme dans un moule.

De manière classique, le poste 10 de soufflage et d'étirage comporte un portique 12 qui est muni d'un rail vertical 14 sur lequel un coulisseau 16 est monté mobile en coulissement suivant un axe vertical d'étirage A1.

Les déplacements du coulisseau 16 sont commandés ici par un galet de guidage 18 qui est monté libre à rotation autour d'un axe transversal A2 et qui coopère par roulement avec une came fixe (non représentée).

Le poste 10 de soufflage et d'étirage comporte un dispositif 20 pour la fixation amovible d'une tige d'étirage 22, encore appelée tige d'élongation, sur le coulisseau 16.

Sur la figure 1, la tige d'étirage 22 est représentée montée sur le coulisseau 16.

L'extrémité axiale inférieure de la tige d'étirage 22 est prévue pour être insérée axialement à l'intérieur d'une préforme (non représentée), par son ouverture, agencée verticalement sous le coulisseau 16, de manière à étirer la préforme verticalement vers le bas, pendant une partie de la phase de moulage du récipient.

Le dispositif de fixation 20 de la tige d'étirage 22 comporte un boîtier 24 qui est fixé ici sur la face inférieure du coulisseau 16, par exemple au moyen de vis.

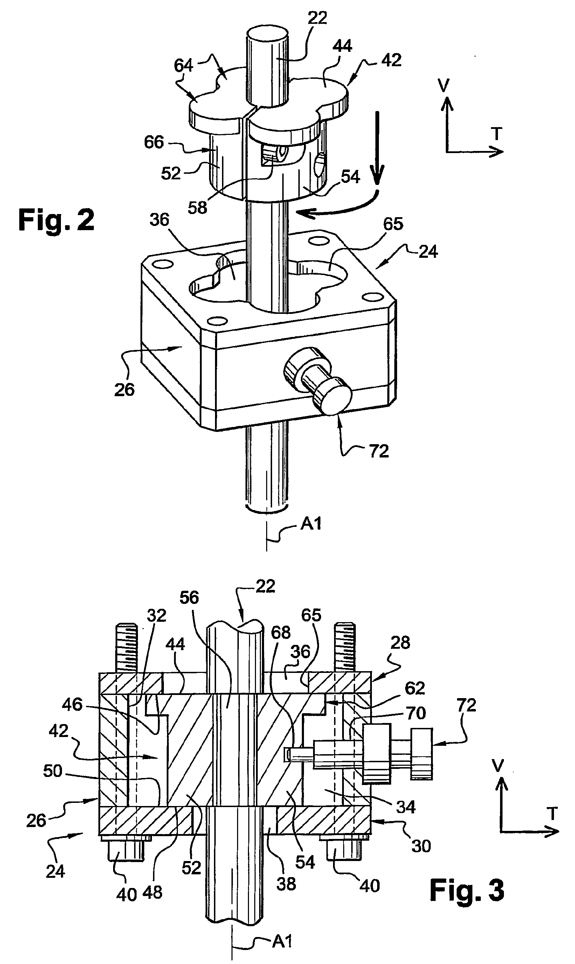

Comme on peut le voir plus particulièrement sur les figures 2 et 3, le boîtier 24 a ici la forme d'un parallélépipède carré qui comporte un corps intermédiaire 26 de section transversale carrée, qui est serré axialement entre une cloison 28 transversale supérieure et une cloison 30 transversale inférieure en forme de plaques.

Le corps intermédiaire 26 comporte un conduit central 32 sensiblement cylindrique, coaxial à l'axe d'étirage, qui délimite radialement un logement 34 interne au boîtier 24 (figure 3).

Le logement 34 est délimité axialement (A1) par les deux cloisons 28, 30.

Chaque cloison 28, 30 comporte une ouverture axiale 36, 38 respective pour permettre le passage d'un tronçon associé de la tige 22.

Sur la figure 3, on a représenté deux vis verticales 40 qui servent à fixer le boîtier 24 sur le coulisseau 16, en serrant axialement le corps intermédiaire 26 entre les deux cloisons 28,30. De préférence, afin d'offrir une meilleur résistance aux efforts, quatre vis verticales 40 sont présentes.

Un élément d'appui 42, ou clame, qui est fixé sur la tige d'étirage 22, est prévu pour être inséré axialement avec la tige 22 à l'intérieur du logement 34 du boîtier 24 en passant par l'ouverture axiale supérieure 36.

L'élément d'appui 42 comporte une surface transversale supérieure 44 qui est prévue pour venir en appui axial contre une portion de la face interne inférieure 46 de la cloison 28 transversale supérieure, pendant l'étape d'étirage, et une surface transversale inférieure 48 qui est prévue pour venir en appui axial contre une portion de la face interne supérieure 50 de la cloison 30 transversale inférieure de manière à retenir la tige 22 axialement vers le bas dans le boîtier 24.

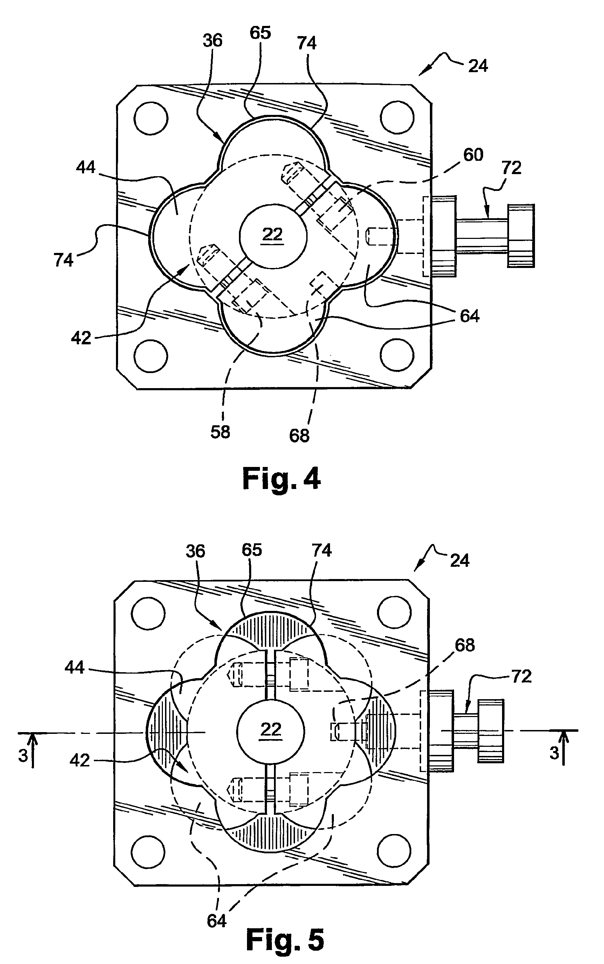

Selon le mode de réalisation représenté ici, l'élément d'appui 42 comporte deux portions circonférentielles 52, 54 qui sont sensiblement symétriques par rapport à un plan axial et qui sont serrées radialement sur un tronçon 56 de la tige d'étirage 22, ici au moyen de deux vis transversales parallèles 58, 60 représentées sur les figures 4 et 5.

Les vis transversales 58, 60 s'étendent chacune suivant une direction orthogonale à un diamètre de la tige 22.

Le tronçon 56 de la tige 22 prévu pour la fixation de l'élément d'appui 42 a ici un diamètre inférieur au diamètre moyen de la tige 22, de sorte qu'il est délimité axialement par deux épaulements.

L'élément d'appui 42 a ici une dimension axiale qui est sensiblement égale à celle du tronçon de fixation 56 et à celle du logement 34.

Conformément aux enseignements de l'invention, le tronçon supérieur d'extrémité 62 de l'élément d'appui 42 est formé par au moins deux oreilles radiales 64 de profil arrondi, en section transversale, la surface transversale supérieure d'appui 44 étant formée par la face transversale supérieure des oreilles 64.

Selon une autre caractéristique de l'invention, le profil transversal formé par le bord périphérique 65 de l'ouverture supérieure 36 du boîtier 24 est sensiblement complémentaire du profil des oreilles 64.

Selon le mode de réalisation représenté ici, chaque portion 52, 54 de l'élément d'appui 42 comporte deux oreilles radiales similaires 64.

Les oreilles 64 sont ici symétriques deux à deux par rapport à un plan axial, et elles ont un profil arrondi de même rayon.

De préférence, les oreilles radiales 64 sont réparties angulairement de manière régulière autour de la tige 22.

Avantageusement, l'élément d'appui 42 comporte un tronçon cylindrique inférieur d'extrémité 66 dont le diamètre est inférieur à la dimension transversale maximale du tronçon supérieur 62 et est supérieur au diamètre de l'ouverture axiale inférieure 38 du boîtier 24, qui a ici une section transversale circulaire.

La surface d'extrémité inférieure du tronçon cylindrique 66 constitue la surface transversale inférieure d'appui 48 de l'élément d'appui 42.

Selon le mode de réalisation représenté ici, le tronçon cylindrique 66 s'étend sur la plus grande partie de la longueur axiale de l'élément d'appui 42, et le tronçon supérieur 62 forme globalement une plaque à l'extrémité supérieure du tronçon cylindrique 66.

De préférence, le tronçon cylindrique 66 comporte, dans une des portions circonférentielles 54, un orifice 68 radial extérieur de blocage angulaire qui est prévu pour recevoir, à travers un trou radial 70 aménagé dans le corps intermédiaire 26, un doigt 72 de verrouillage complémentaire, en vue d'immobiliser angulairement l'élément d'appui 42 en position montée dans le logement 34.

On explique maintenant le fonctionnement du dispositif de fixation 20 selon l'invention, notamment en référence aux figures 4 et 5.

L'élément d'appui 42 est d'abord fixé sur la tige 22, puis la tige 22 est insérée axialement par le haut, avec l'élément d'appui 42, dans le boîtier 24 à travers l'ouverture supérieure 36, selon un montage du type à baïonnette.

Pour que cette insertion soit possible, il est nécessaire de positionner angulairement la tige 22 et l'élément d'appui 42, par rapport à l'ouverture supérieure 36, de manière que les oreilles radiales 64 soient en regard des échancrures 74 complémentaires formées par le bord 65 de l'ouverture 36, comme on l'a représenté sur la figure 4.

Pendant l'insertion, il convient aussi de décaler le doigt 72 de verrouillage radialement vers l'extérieur de manière à permettre le passage du tronçon cylindrique 66.

Une fois que l'élément d'appui est reçu entièrement dans le logement 34, on provoque le pivotement de la tige 22 autour de son axe A1 d'un huitième de tour, de sorte que les oreilles radiales 64 viennent se placer en partie sous la cloison supérieure 28 du boîtier 24, comme on l'a représenté sur la figure 5.

L'orifice 68 radial de blocage angulaire se trouve alors angulairement en vis-à-vis du doigt 72 de verrouillage, qui peut alors coulisser radialement à l'intérieur de l'orifice 68 radial, par exemple sous l'effet d'un ressort de rappel (non représenté).

La tige 22 et son élément d'appui 42 occupe alors la position montée dans le boîtier 24, ce qui permet de réaliser des opérations d'étirage.

Pendant la phase d'étirage, les portions de la surface supérieure 44 des oreilles radiales 64 qui sont sous la cloison 28 supérieure viennent en appui axial contre cette cloison 28, ce qui permet de reprendre les efforts axiaux qui sont appliqués sur la tige 22.

Selon le mode de réalisation représenté ici, l'élément d'appui 42 comporte un seul orifice 68 radial de verrouillage angulaire, de sorte qu'il n'existe qu'une seule position angulaire montée et verrouillée. Cette caractéristique peut être utile, en particulier dans le cas d'une tige d'élongation 22 comportant un conduit interne de soufflage, car ce type de tige 22 comporte une seule position angulaire de montage.

Selon une variante de réalisation (non représentée), l'élément d'appui peut comporter plusieurs orifices 68 radiaux de verrouillage angulaire, répartis angulairement de manière régulière, afin de permettre plusieurs positions angulaires de montage et de verrouillage.

## Revendications

1. Agencement pour la fixation amovible d'une tige d'étirage (22) sur un coulisseau mobile (16) appartenant à une machine (10) de soufflage et d'étirage d'une préforme pour la fabrication de récipients, du type dans lequel le coulisseau (16) est monté coulissant par rapport à un support (12) suivant un axe (A1) sensiblement vertical au-dessus de l'ouverture de la préforme, du type dans lequel la tige d'étirage (22) est fixée sur le coulisseau (16) par l'intermédiaire d'un dispositif de fixation (20) comportant :
- un boîtier (24) qui est fixé sur le coulisseau (16), qui est muni d'une cloison (28) transversale supérieure et d'une cloison (30) transversale inférieure délimitant axialement un logement interne (34), chaque cloison (28, 30) comportant une ouverture axiale (36, 38) permettant le passage d'un tronçon associé de la tige d'étirage (22),
- un élément d'appui (42) qui comporte plusieurs portions circonférentielles (52, 54) serrées radialement sur un tronçon (56) de la tige d'étirage (22), qui est prévu pour être inséré axialement à l'intérieur du logement (34) du boîtier (24) en passant par l'ouverture axiale supérieure (36) du boîtier (24), et qui comporte une surface transversale supérieure (44) prévue pour venir en appui axial contre une portion de la face interne inférieure (46) de la cloison (28) transversale supérieure du boîtier (24), pendant l'étape d'étirage, et une surface transversale inférieure (48) prévue pour venir en appui axial contre une portion de la face interne supérieure (50) de la cloison (30) transversale inférieure du boîtier (24) de manière à retenir la tige (22) axialement vers le bas dans le boîtier (24),
de manière que la tige d'étirage (24) puisse être fixée sur le coulisseau (16) par un montage du type à baïonnette, la tige (22) étant insérée axialement, avec l'élément d'appui (42), dans le boîtier (24), et la tige (22) subissant un pivotement autour de son axe (A1), depuis une position angulaire d'insertion jusqu'à une position angulaire montée, pour placer une portion de la surface transversale supérieure (44) de l'élément d'appui (42) en regard de la face interne associée (46) du boîtier (24),
**caractérisé en ce que** le tronçon supérieur d'extrémité (62) de l'élément d'appui (42) est formé par au moins deux oreilles radiales (64) de profil arrondi, en section transversale, la surface transversale supérieure d'appui (44) étant formée par la face transversale supérieure des oreilles (64), et **en ce que** le profil transversal formé par le bord périphérique (65) de l'ouverture supérieure (36) du boîtier (24) est sensiblement complémentaire du profil des oreilles (64).

2. Agencement selon la revendication précédente, **caractérisé en ce que** l'élément d'appui (42) comporte un tronçon cylindrique inférieur d'extrémité (66) dont le diamètre est inférieur à la dimension transversale maximale du tronçon supérieur (62) et est supérieur au diamètre de l'ouverture axiale inférieure (38) du boîtier (24), de manière que la face transversale inférieure (48) du tronçon cylindrique (66) vienne en appui axial contre la face interne (50) de la cloison (30) transversale inférieure du boîtier (24).

3. Agencement selon l'une quelconque des revendications précédentes, **caractérisé en ce que** le tronçon supérieur (62) de l'élément d'appui (42) comporte quatre oreilles radiales (64) similaires.

4. Agencement selon l'une quelconque des revendications précédentes, **caractérisé en ce que** l'élément d'appui (42) est réalisé en deux portions (52, 54) sensiblement symétriques par rapport à un plan axial.

5. Agencement selon la revendication précédente prise en combinaison avec la revendication 3, **caractérisé en ce que** chaque portion (52, 54) comporte deux oreilles radiales (64).

6. Agencement selon la revendication 4 ou 5, **caractérisé en ce que** les deux portions (52, 54) sont serrées radialement contre le tronçon associé (56) de la tige d'étirage (22) au moyen d'au moins une vis de serrage (58, 60) qui s'étend suivant une direction sensiblement orthogonale à un diamètre de la tige d'étirage (22).

7. Agencement selon l'une quelconque des revendications précédentes, **caractérisé en ce que** les oreilles radiales (64) sont réparties angulairement de manière régulière.

8. Agencement selon l'une quelconque des revendications précédentes, **caractérisé en ce qu'**un tronçon (66) de l'élément d'appui (42) comporte un orifice (68) radial de blocage angulaire qui est prévu pour recevoir, à travers un trou (70) aménagé dans une paroi latérale (26) du boîtier (24), un doigt (72) de verrouillage complémentaire, en vue d'immobiliser l'élément d'appui (42) dans sa position montée.

## Claims

1. Arrangement for the removable attachment of a stretching rod (22) on a movable slide (16) belonging to a machine (10) for stretch-blow moulding a preform for the manufacture of receptacles, of the type in which the slide (16) is mounted so as to slide relative to a support (12) along a substantially vertical axis (A1) above the opening of the preform, of the type in which the stretching rod (22) is attached to the slide (16) by means of an attachment device (20) comprising:
- a casing (24) that is attached to the slide (16), that is furnished with a top transverse partition (28) and a bottom transverse partition (30) axially delimiting an internal housing (34), each partition (28, 30) comprising an axial opening (36, 38) allowing an associated section of the stretching rod (22) to pass through,
- a bearing element (42) that comprises several circumferential portions (52, 54) radially clamped onto a section (56) of the stretching rod (22), that is designed to be inserted axially inside the housing (34) of the casing (24) while passing through the top axial opening (36) of the casing (24), and that comprises a top transverse surface (44) designed to come to bear axially against a portion of the bottom inner face (46) of the top transverse partition (28) of the casing (24) during the stretching step, and a bottom transverse surface (48) designed to come to bear axially against a portion of the top inner face (50) of the bottom transverse partition (30) of the casing (24) in order to hold the rod (22) axially down in the casing (24),
so that the stretching rod (24) can be attached to the slide (16) by a mount of the bayonet type, the rod (22) being inserted axially, with the bearing element (42), in the casing (24), and the rod (22) being pivoted about its axis (A1), from an angular insertion position to an angular mounted position, to place a portion of the top transverse surface (44) of the bearing element (42) facing the associated inner face (46) of the casing (24),
**characterized in that** the top end section (62) of the bearing element (42) is formed by at least two radial lugs (64) of rounded profile, in transverse section, the top transverse bearing surface (44) being formed by the top transverse face of the lugs (64), and **in that** the transverse profile formed by the peripheral edge (65) of the top opening (36) of the casing (24) substantially matches the profile of the lugs (64).

2. Arrangement according to the preceding claim, **characterized in that** the bearing element (42) comprises a bottom end cylindrical section (66) whose diameter is less than the maximum transverse dimension of the top section (62) and is greater than the diameter of the bottom axial opening (38) of the casing (24), so that the bottom transverse face (48) of the cylindrical section (66) comes to bear axially against the inner face (50) of the bottom transverse partition (30) of the casing (24).

3. Arrangement according to any one of the preceding claims, **characterized in that** the top section (62) of the bearing element (42) comprises four similar radial lugs (64).

4. Arrangement according to any one of the preceding claims, **characterized in that** the bearing element (42) is made in two parts (52, 54) that are substantially symmetrical relative to an axial plane.

5. Arrangement according to the preceding claim, taken in combination with Claim 3, **characterized in that** each part (52, 54) comprises two radial lugs (64).

6. Arrangement according to Claim 4 or 5, **characterized in that** the two parts (52, 54) are radially clamped against the associated section (56) of the stretching rod (22) by means of at least one clamping screw (58, 60) which extends in a direction substantially orthogonal to a diameter of the stretching rod (22).

7. Arrangement according to any one of the preceding claims, **characterized in that** the radial lugs (64) are distributed angularly in an even manner.

8. Arrangement according to any one of the preceding claims, **characterized in that** a section (66) of the bearing element (42) comprises a radial orifice (68) for angular immobilization that is designed to receive, through a hole (70) made in a side wall (26) of the casing (24), a matching locking finger (72) in order to immobilize the bearing element (42) in its mounted position.

## Patentansprüche

1. Anordnung für die lösbare Befestigung einer Reckstange (22) auf einem beweglichen Schieber (16), der zu einer Blasform- und Reckmaschine (10) für einen Vorformling zur Herstellung von Behältern gehört, der Art, bei welcher der Schieber (16) gleitend bezogen auf einen Träger (12) entlang einer im Wesentlichen vertikalen Achse (A1) oberhalb der Öffnung des Vorformlings angebracht ist, der Art, bei welcher die Reckstange (22) auf dem Schieber (16) mittels einer Befestigungsvorrichtung (20) befestigt ist, welche aufweist:
- ein Gehäuse (24), das auf dem Schieber (16) befestigt ist, das mit einer oberen transversalen Trennwand (28) und einer unteren transversalen Trennwand (30) ausgestattet ist, die axial einen Innensitz (34) abgrenzen, wobei jede Trennwand (28, 30) eine axiale Öffnung (36, 38) aufweist, die das Durchgehen eines der Reckstange (22) zugeordneten Teilstücks ermöglicht,
- ein Auflageelement (42), dass mehrere radial auf einem Teilstück (56) der Reckstange (22) verteilte Außenbereiche (52, 54) aufweist, das vorgesehen ist, um axial in den Innensitz (34) des Gehäuses (24) eingesetzt zu werden, indem es durch die axiale obere Öffnung (36) des Gehäuses (24) durchgeht, und das eine obere transversale Fläche (44) aufweist, die vorgesehen ist, um während des Reckschritts axial gegen einen Bereich der unteren Innenseite (46) der oberen transversalen Trennwand (28) des Gehäuses (24) zum Aufliegen zu kommen, und eine untere transversale Fläche (48), die vorgesehen ist, um axial gegen einen Bereich der oberen Innenfläche (50) der unteren transversalen Trennwand (30) des Gehäuses (24) zur Auflage zu kommen, um die Stange (22) axial gegen ein unteres Teil des Gehäuses (24) zurückzuhalten,
- damit die Reckstange (24) auf dem Schieber (16) durch einen Zusammenbau der Art Bajonett befestigt werden kann, wobei die Stange (22) mit dem Auflageelement (42) in das Gehäuse (24) axial eingesetzt ist und wobei die Stange (22) von einer winkligen Einsetzposition zu einer winkligen Montageposition um ihre Achse (A1) gedreht wird, um einen Bereich der oberen transversalen Fläche (44) des Auflageelements (42) gegenüber der dem Gehäuse (24) zugeordneten Innenfläche (46) anzuordnen,
**dadurch gekennzeichnet, dass** das obere Endteilstück (62) des Auflageelements (42) aus wenigstens zwei radialen Ohren (64) mit im Querschnitt abgerundetem Profil gebildet ist, wobei die obere transversale Auflagefläche (44) durch die obere transversale Fläche der Ohren (64) gebildet ist, und **dadurch**, dass das durch den Außenrand (65) der oberen Öffnung (36) des Gehäuses (24) gebildete Querprofil im Wesentlichen komplementär zum Profil der Ohren (64) ist.

2. Anordnung gemäß dem vorausgegangenen Anspruch, **dadurch gekennzeichnet, dass** das Auflageelement (42) ein zylindrisches unteres Endteilstück (66) aufweist, dessen Durchmesser kleiner ist als die maximale Querabmessung des oberen Teilstücks (62) und größer ist als der Durchmesser der unteren axialen Öffnung (38) des Gehäuses (24), damit die untere transversale Seite (48) des zylindrischen Teilstücks (66) axial gegen die Innenseite (50) der unteren transversalen Trennwand (30) des Gehäuses (24) zur Auflage kommt;

3. Anordnung gemäß einem der vorausgegangenen Ansprüche, **dadurch gekennzeichnet, dass** das obere Teilstück (62) des Auflageelements (42) vier gleiche radiale Ohren (64) aufweist.

4. Anordnung gemäß einem der vorausgegangenen Ansprüche, **dadurch gekennzeichnet, dass** das Auflageelement (42) bezogen auf eine axiale Ebene aus zwei im Wesentlichen symmetrischen Bereichen (52, 54) gebildet ist.

5. Anordnung gemäß dem vorausgegangenen Anspruch in Kombination mit Anspruch 3, **dadurch gekennzeichnet, dass** jeder Bereich (52, 54) zwei radiale Ohren (64) aufweist.

6. Anordnung gemäß Anspruch 4 oder 5, **dadurch gekennzeichnet, dass** die beiden Bereiche (52, 54) radial gegen das der Reckstange (22) zugeordnete Teilstück (56) mittels wenigstens einer Stellschraube (58, 60) festgestellt sind, die sich entlang einer Richtung im Wesentlichen orthogonal zu einem Durchmesser der Reckstange (22) erstreckt.

7. Anordnung gemäß einem der vorausgegangenen Ansprüche, **dadurch gekennzeichnet, dass** die radialen Ohren (64) winklig regelmäßig verteilt sind.

8. Anordnung gemäß einem der vorausgegangenen Ansprüche, **dadurch gekennzeichnet, dass** ein Teilstück (66) des Auflageelements (42) eine radiale Öffnung (68) zum winkligen Blockieren aufweist, die vorgesehen ist, um durch ein in der Seitenwand (26) des Gehäuses (24) vorgesehenes Loch (70) einen komplementären Verriegelungszapfen (72) aufzunehmen, um das Auflageelement (42) in seiner montierten Position unbeweglich zu machen.
